# EUROPÄISCHE PATENTSCHRIFT

(11) **EP 1 129 880 B1**
(45) Veröffentlichungstag und Bekanntmachung des Hinweises auf die Patenterteilung: **12.04.2006**
(21) Anmeldenummer: 01104118.3
(22) Anmeldetag: 21.02.2001
(51) Int. Cl.: B60J 7/047

(54) **Öffnungsfähiges Fahrzeugdach**
Openable roof for vehicle
Toit ouvrant pour véhicule

(30) Priorität: 29.02.2000 DE 10009436; 29.02.2000 DE 10009437
(43) Veröffentlichungstag der Anmeldung: 05.09.2001
(73) Patentinhaber: Webasto Vehicle Systems International GmbH, 82131 Stockdorf (DE)
(72) Erfinder: De Gaillard, Francois, 85390 Mouilleron en Pareds (FR)
(74) Vertreter: Wiese, Gerhard

(56) Entgegenhaltungen:
- DE-A- 4 341 343
- GB-A- 223 789
- GB-A- 347 940

## Beschreibung

Die Erfindung betrifft ein öffnungsfähiges Fahrzeugdach mit einem eine vordere Dachöffnung abdeckenden vorderen Dachsystem, das wenigstens einen mit seiner Hinterkante über das feste Fahrzeugdach ausstellbaren und zumindestens teilweise oberhalb des Niveaus des festen Fahrzeugdachs verfahrbaren Deckel umfaßt.

Aus der EP 0 531 881 A1 ist ein Fahrzeugdach mit zwei Deckeln bekannt, die hintereinander in einem festen Fahrzeugdach angeordnet sind. Die beiden Deckel sind zwar durch einen einzigen Antrieb zu betätigen, die Betätigung kann jedoch separat für jeden Deckel erfolgen.

Es sind ferner Fahrzeuge bekannt, bei denen eine Heckscheibe in einer Heckklappe separat absenkbar ist, um einen Zugang zu einem hinteren Laderaum des Fahrzeugs insbesondere für das Verstauen sperriger Gegenstände zu erleichtern.

Aus der DE 197 13 347 A1 ist weiterhin ein außengeführtes Schiebedach bekannt, bei dem die Hinterkante des Deckels durch separate Stützhebel abgestützt wird, die an Gleitelementen in Führungen verfahrbar sind, die seitlich außerhalb der Dachöffnung angeordnet sind.

Der vorliegenden Erfindung liegt die Aufgabe zugrunde, ein öffnungsfähiges Fahrzeugdach gemäß dem Oberbegriff des Patentanspruchs 1 derart weiterzuentwickeln, daß die großzügigen Öffnungsmöglichkeiten eines vorderen Dachsystems durch ein weiteres Dachsystem erweitert werden, mit dem eine verbesserte Belüftung des Fahrzeuginnenraums und eine erleichterte Beladung eines Laderaums möglich wird.

Diese Aufgabe wird durch die Merkmale des Patentanspruchs 1 gelöst. Vorteilhafte Ausgestaltungen der Erfindung sind den Unteransprüchen zu entnehmen.

Erfindungsgemäß ist vorgesehen, daß ein öffnungsfähiges Fahrzeugdach im hinteren Bereich ein hinteres Dachsystem mit wenigstens einem starren Deckel aufweist, das eine hintere Dachöffnung abdeckt oder freigibt und damit eine große Beladeöffnung im Fahrzeugdach zum Verstauen sperriger Ladegüter ermöglicht. Die Beladung des Laderaums wird dadurch vereinfacht, daß das hintere Deckelteil unmittelbar mit seiner Hinterkante an ein im wesentlichen vertikales Karosserieteil wie eine Heckklappe, Hecktür oder Heckscheibe des Fahrzeugs angrenzt. So läßt sich beispielsweise durch Absenken der Heckscheibe in die Hecktür oder Heckklappe bei geöffnetem hinteren Deckel eine durchgehende Öffnung erreichen, die den hinteren Dachbereich und die halbe Höhe der Hecktür umfaßt. Somit wird die Ladefläche ähnlich wie bei einem Pickup-Fahrzeug für das Beladen von hinten und oben freigelegt (= "Semi-Pickup"). Vor diesem hinteren Dachsystem ist ein vorderes Dachsystem mit wenigstens einem mit seiner Hinterkante über das feste Fahrzeugdach ausstellbaren und oberhalb oder unterhalb des festen Fahrzeugdachs verfahrbaren Deckel vorgesehen. Durch diese Kombination zweier an sich bekannter Dachsysteme wird die Möglichkeit geschaffen, den nach vorne geschobenen Deckel durch den mit seiner Hinterkante ausgestellten Deckel des vorderen Dachsystems vor angreifenden Windkräften im Fahrbetrieb zu schützen. Ferner können für eine verbesserte Durchlüftung des Fahrzeuginnenraums die Deckel beider Dachsysteme zumindestens in eine geschwenkte Lüftungsposition geöffnet werden. Für eine Vereinfachung der Beladung ist es vorteilhaft, wenn das hintere Deckelteil unmittelbar mit seiner Hinterkante an eine Heckklappe, Hecktür oder Heckscheibe des Fahrzeugs angrenzt. So läßt sich beispielsweise durch Absenken der Heckscheibe in die Hecktür oder Heckklappe bei geöffnetem hinteren Deckelteil eine durchgehende Öffnung erreichen, die den hinteren Dachbereich und die halbe Höhe der Hecktür umfaßt. Somit wird die Ladefläche ähnlich wie bei einem Pickup-Fahrzeug für das Beladen von hinten und oben freigelegt (= "Semi-Pickup").

Besonders vorteilhaft ist es, wenn der Deckel des vorderen Dachsystems in vollständig ausgestelltem Zustand mit seiner Hinterkante höher liegt als der bzw. die geöffneten Deckel des hinteren Dachsystems. Dadurch wird der Fahrtwind vollständig über den bzw. die hinteren Deckel hinweg geleitet.

Vorteilhaft ist zwischen beiden Dachsystemen ein mittlerer Bereich des festen Fahrzeugdachs angeordnet, dessen Länge vorzugsweise dem vorderen Deckel oder dem hinteren Deckel entspricht. Durch eine solche Verbindung zwischen den Seitenholmen wird zum einen die Stabilität des Fahrzeugs erhöht. Zum anderen ist jeweils einer der Deckel vollständig zu öffnen, wobei er über bzw. unter dem mittleren Bereich des Fahrzeugdachs liegt, während der andere Deckel zumindest noch in eine Ausstellposition, vorzugsweise jedoch ebenfalls in eine zumindest teilweise verschobene Position bringbar ist.

Besonders vorteilhaft ist eine Ausführungsform, bei der das vordere Dachsystem ein außengeführtes Schiebedach ist, dessen Deckel nahe seiner Hinterkante von Stützhebeln abgestützt wird, deren untere Enden an Gleitelementen gelagert sind, die an seitlich außerhalb der Dachöffnung angeordneten Führungen verschiebbar sind. Die Verwendung eines außengeführtes Schiebedachs ermöglicht das komfortable Freilegen einer großen vorderen Dachöffnung, solange das hintere Deckelteil nicht einen bestimmten Öffnungsgrad erreicht hat. Das Fahrzeug hat somit für den Benutzer einen Doppelnutzen: bei geöffnetem vorderen Dachsystem bietet es die Vorteile eines großen Schiebedachs, bei geöffnetem hinteren Dachsystem bietet es einen großzügigen Zugang zum Laderaum, wobei gleichzeitig bei ausgestelltem vorderen Deckel auch dort noch eine Entlüftungsmöglichkeit gegeben ist.

In einer besonders vorteilhaften Weiterbildung sind das vordere und das hintere Dachsystem über getrennte elektrische Antriebe antreibbar, die von einem gemeinsamen Steuergerät derart ansteuerbar sind, daß der Deckel des vorderen Dachsystems dann nur ausstellbar, jedoch nicht in Längsrichtung verschiebbar ist, wenn das hintere Dachsystem zumindestens einen bestimmten Teilöffnungsgrad erreicht hat. Das Steuergerät übernimmt somit die Aufgabe, Kollisionen der Dachsysteme auszuschließen. Gemäß einer Variante kann vorgesehen sein, daß der Deckel des vorderen Dachsystems zwangsweise in seine Ausstellposition verfahren wird, sobald das Steuergerät ein Signal zur Öffnung des hinteren Dachsystems zumindestens für einen bestimmten Teilöffnungsgrad erhält. Hierdurch kann der vordere Deckel als Windabweiser für das geöffnete hintere Deckelteil dienen.

Schließlich ist es vorteilhaft, wenn dem vordere Dachsystem eine Windabweislamelle vorgelagert ist, die in eine Ausstellposition geschwenkt wird, sobald der Deckel des vorderen Dachsystems zumindestens einen bestimmten Teilöffnungsgrad erreicht hat. Durch diese Ausgestaltung wird auch die vordere Dachöffnung bei zumindestens teilweise nach hinten verfahrenem vorderen Deckel wirksam vor Zugluft und Wndgeräuschen geschützt.

Nachfolgend ist ein Ausführungsbeispiel der Erfindung anhand der Zeichnung beschrieben. Es zeigt:
- Fig. 1: eine schematische perspektivische Ansicht eines Fahrzeugdachs mit einem vorderen außen geführten Schiebedach, einer davor angeordneten Windabweislamelle und einem dahinter liegenden, nach vorn öffnenden außengeführten Schiebedach,
- Fig. 2: das Fahrzeugdach gemäß Fig. 1 mit geöffnetem vorderen Deckel,
- Fig. 3: das Fahrzeugdach gemäß Fig. 1 mit geöffnetem hinteren Deckel,
- Fig. 4: das Fahrzeugdach gemäß Fig. 3 mit zusätzlich abgesenkter Heckscheibe,
- Fig. 5: eine Ausschnitt-Ansicht auf den linken Seitenholm mit den Führungsschienen und Gleitelementen,
- Fig. 6: eine Variante eines Fahrzeugdachs mit einem hinteren Hebedach,
- Fig. 7: das Fahrzeugdach gemäß Fig. 6 mit ausgestelltem hinteren Deckel,
- Fig. 8: das Fahrzeugdach gemäß Fig. 6 mit entferntem hinteren Deckel,
- Fig. 9: eine schematische perspektivische Ansicht eines Fahrzeugdachs mit einem vorderen öffnungsfähigen Dachsystem, einer davor angeordneten Windabweislamelle und einem hinter einem Bereich des festen Fahrzeugdachs liegenden hinteren Dachsystem,
- Fig. 10: das Fahrzeugdach gemäß Fig. 9, bei dem der geöffnete vordere Deckel als Schiebe-Hebedach und der hintere Deckel als außengeführtes Schiebedach ausgebildet ist, und
- Fig. 11: das Fahrzeugdach gemäß Fig. 9, bei dem der geöffnete vordere Deckel als außengeführtes Schiebedach und der hintere Deckel als Schiebe-Hebedach ausgebildet ist.

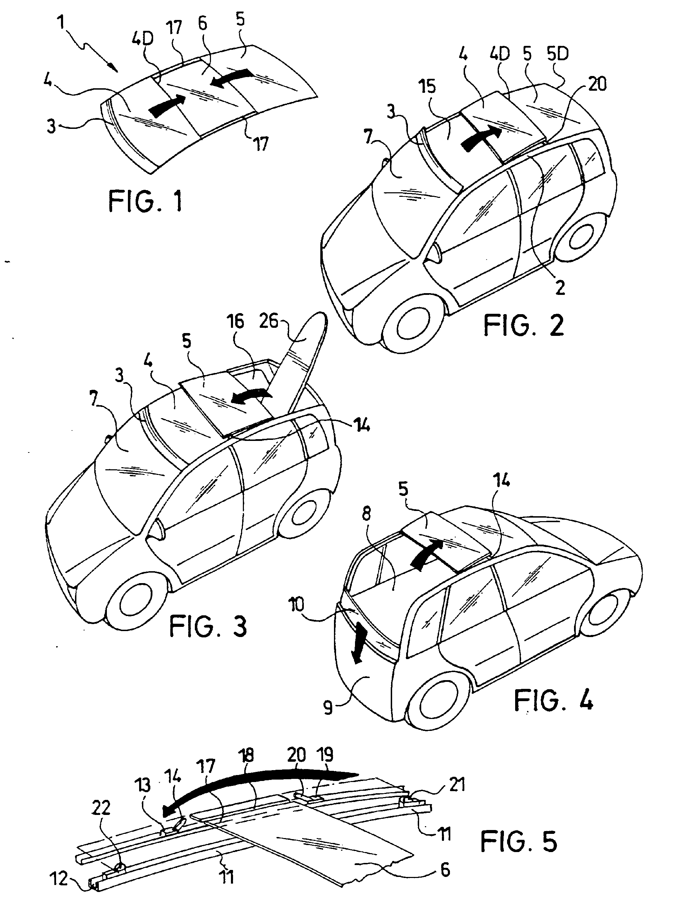

Bei dem in Fig. 1 bis 3 dargestellten Fahrzeugdach 1 schließt sich an eine Frontscheibe 7 nach hinten eine Windabweislamelle 3, ein vorderer Deckel 4 eines ein vorderes Dachsystem bildenden außengeführten Schiebedachs und ein ein hinterer Deckelteil 5 eines hinteren Dachsystems an, welches im Ausführungsbeispiel gemäß den Fig. 1 bis 5 ebenfalls als außengeführtes Schiebedach ausgebildet ist, wobei das Deckelteil 5 jedoch von hinten nach vorne öffnet. Das außengeführte vordere Schiebedach mit seinem Deckel 4 und das außengeführte hintere Schiebedach mit seinem hinteren Deckelteil 5 werden seitlich von Seitenholmen 2 begrenzt. Zwischen beiden Dachsystemen ist ein Bereich 6 des festen Fahrzeugdachs 1 vorgesehen, dessen Länge in Fahrzeuglängsrichtung gesehen in etwa dem Deckel 4 bzw. dem Deckelteil 5 entspricht.

Die Hinterkante 5D des hinteren Deckelteils 5 grenzt unmittelbar an die Oberkante einer Heckscheibe 10 an, die in einer Hecktür 9 oder Heckklappe nach unten versenkbar gelagert ist (siehe Fig. 4).

Wie in Fig. 2 dargestellt, ist der Deckel 4 des außengeführten Schiebedachs im Bereich seiner Hinterkante 4D in ausgestellten Zustand durch einen Stützhebel 20 auf jeder Seite abgestützt. Das untere Ende des Stützhebels 20 ist schwenkbar an einem Gleitelement 19 gelagert, welches längsverschiebbar in einem Führungskanal 18 geführt ist. Der Führungskanal 18 ist in einer Führungsschiene 17 ausgebildet, die am Seitenholm 2 gelagert ist. Der Führungskanal 18 ist für das Austreten des Stützhebels 20 nach oben geöffnet und wird bei geschlossenem Deckel 4 von zwei nicht dargestellten Dichtungselementen abgedeckt, die zu beiden Seiten am oberen Rand des Führungskanals 18 angeordnet sind.

Die Dichtungselemente sind jeweils mit einer Dichtlippe versehen, die bei geschlossenem Deckel 4 und abgesenktem Stützhebel 20 dicht aneinander anliegen und den Führungskanal 18 vollständig nach oben abdecken. Beim Ausstellen der Hinterkante 4D des Deckels 4 übernimmt der Stützhebel 20 seine Stützfunktion und tritt dabei an den Dichtlippen vorbei nach oben über das feste Fahrzeugdach 1 aus. Die Dichtlippen weichen dabei zur Seite und schmiegen sich an den Stützhebel 20 an.

Vom Seitenholm 2 aus nach innen gesehen schließt sich an die Führungsschiene 17 im Bereich einer vorderen Dachöffnung 15 bzw. eine hinteren Dachöffnung 16 eine Führungsschiene 11 an, in deren Führungskanal 12 ein vorderes Gleitelement 21 des vorderen Deckels 4 bzw. ein hinteres Gleitelemente 22 des hinteren Deckelteils 5 längsverschiebbar gelagert ist. Das vordere Gleitelemente 21 dient zur Lagerung der vorderen Schwenkachse des Deckels 4. Das hintere Gleitelementen 22 dient zur Lagerung der hinteren Schwenkachse des Deckelteils 5. Im geöffneten Zustand stützt sich der vordere Deckel 4 somit dem vorderen Bereich über seine Schwenkachse an den Gleitelementen 21 und im hinteren Bereich mittels der Stützhebel 20 ab. Durch die stabile Abstützung im Bereich seiner Hinterkante läßt sich der vordere Deckel 4 soweit nach hinten verschieben, daß etwa 90 Prozent der vorderen Dachöffnung 15 freigelegt werden.

Das hintere Deckelteil 5 stützt sich im Bereich seine Hinterkante über seine Schwenkachse an den Gleitelementen 22 ab. Im Bereich der Vorderkante erfolgt die Abstützung über Stützhebel 14, die mit ihrem unteren Ende an Gleitelementen 13 gelagert sind, welche ebenfalls beim Verschieben des hinteren Deckelteils 5 nach vorn im Führungskanal 18 der Führungsschiene 17 geführt sind. Die Mechanik des hinteren Deckelteils 5 entspricht im wesentlichen der Mechanik des vorderen Deckels 4. Der Unterschied besteht lediglich darin, daß das hintere Deckelteil 5 in umgekehrte Richtung, nämlich von hinten nach vorne betätigt wird. Die Mechanik ist ausführlich in der eingangs genannten DE 197 13 347 A1 beschrieben, deren Offenbarungsgehalt hiermit ausdrücklich zum Gegenstand der vorliegenden Anmeldung gemacht wird.

In Fig. 3 ist das hintere Dachsystem mit dem Deckelteil 5vollständig geöffnet, wobei das Deckelteil 5 von hinten nach vorne gefahren ist . Dadurch wird die hintere Dachöffnung 16 nahezu vollständig, das heißt zu etwa 90 Prozent freigelegt. Bei gleichzeitiger Absenkung der Heckscheibe 10 in die Hecktür 9 oder Heckklappe wird eine Beladungsöffnung freigelegt, die nicht nur den hinteren Dachbereich, sondern auch den oberen Teil der hinteren Fahrzeugabdeckung (Hecktür 9) umfaßt. Dadurch wird eine hintere Ladefläche 8 geschaffen, die annähernd dem eines Pickup-Fahrzeugs entspricht. Hier durch können auch sperriger Ladegüter auf der Ladeflache 8 verladen werden. Bereits die geöffnete hintere Dachöffnung 16 ermoglicht eine großzügige Belademöglichkeit für lange Gegenstände, beispielsweise ein Surfbrett 26 als Ladegut. Für das Abstützen langer Gegenstände kann beispielsweise am hinteren Rand der Dachöffnung 16 ein Bügel eingesetzt werden, der seitlich im Bereich der Führungsschienen 11 befestigbar ist.

Das nach vorne geschobene Deckelteil 5 wird durch den in mehreren Zwischenstadien bis zur vollständigen Ausstellungsposition anhebbaren Deckel 4 wirksam vor dem angreifenden Fahrtwind geschützt. Die Position der Hinterkante 4D des Deckels 4 liegt in vollständig ausgestellten Zustand um eine Höhendifferenz h höher als die ausgestellte Vorderkante des Deckelteils 5. Dadurch wird der Fahrtwind vollstandig über das hintere Deckelteil 5 hinweggeleitet. Auch die hintere Dachöffnung 16 ist dadurch wirksam vor Zugluft geschützt.

Bei dem im Fig. 2 dargestellten Öffnungszustand ist das hintere Deckelteil 5 vollständig geschlossen. Dagegen ist der Deckel 4 des außengeführten Schiebedachs mit seiner Hinterkante ausgestellt, wobei die Funktion der Stützhebel 20 mit angedeutet ist. Der Deckel 4 läßt sich zur Freigabe der vorderen Dachöffnung 15 nahezu vollständig über das hintere Deckelteil nach hinten verfahren. Dies ist dadurch möglich, weil die Führungsschienen 17 für den Deckel 4 bzw. den Stützhebel 20 seitlich außerhalb der Führungsschienen 11 angeordnet sind.

Um die vordere Dachöffnung 15 ebenfalls vor Zugluft zu schützen, ist bei geöffnetem Deckel 4 die Windabweislamelle 3 ausgestellt.

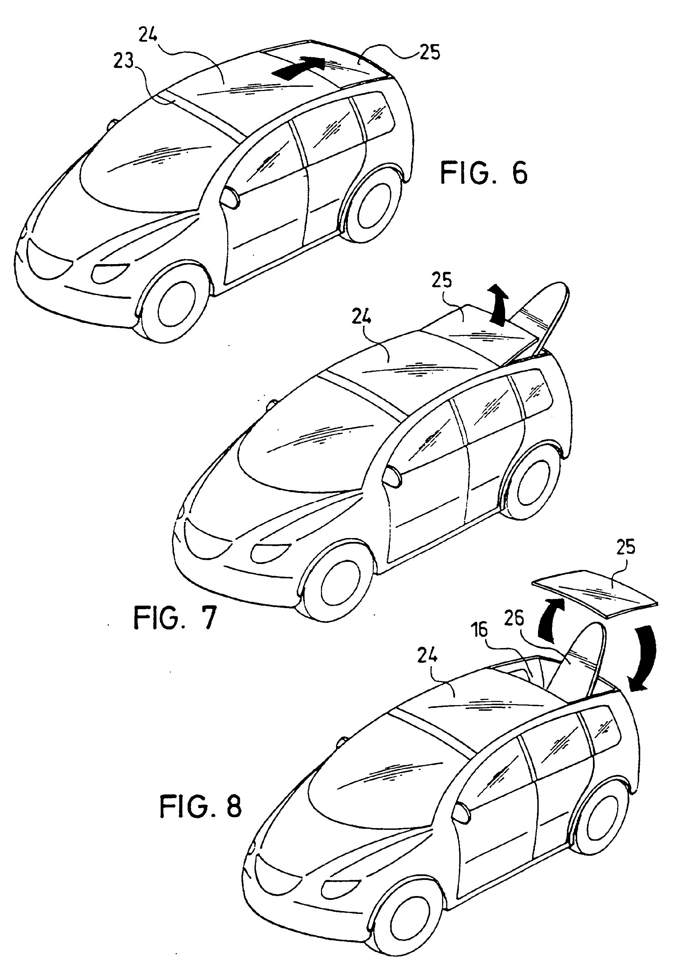

Bei der in den Fig. 6 bis 8 dargestellten Variante wird das hintere Dachsystem von einem Hebedach gebildet, dessen Deckel 25 mit seine Hinterkante ausstellbar und gemäß einer weiteren Option zur Freigabe eine hinteren Dachöffnung 16 vollständig aus dem Fahrzeugdach entnehmbar ist. Dem Deckel 25 ist ein großer Deckel 24 eines außengeführten Schiebedaches vorgelagert. Mittels diesem ist eine große vordere Dachöffnung freilegbar, wenn der Deckel 24 analog zum Deckel 4 an nicht dargestellten Führungsschienen nach hinten über den Deckel 25 verfahren wird. Dem Deckel 24 wiederum ist eine Windabweislamelle 23 vorgelagert, die den Fahrtwind bei zumindestens teilweise nach hinten geschobenem Deckel 24 über die vordere Dachöffnung hinweg leitet. Bei ausgestelltem hinteren Deckel 25 und insbesondere bei dessen vollständiger Entnahme gemäß Fig. 8 ist ein Beladen des Fahrzeugs mit langen Gegenständen möglich.

Durch das dargestellte Fahrzeugdach werden die Vorzüge eines bekannten außengeführten Schiebedachs mit denen eines zweiten hinteren Dachsystems für den besonderen Zweck der Freilegung eines hinteren Laderaums hervorragend kombiniert. Bei Ausbildung des hinteren Dachsystems als außengeführtes Schiebedach können Gleichteile für beide Dachsystemen verwendet werden.

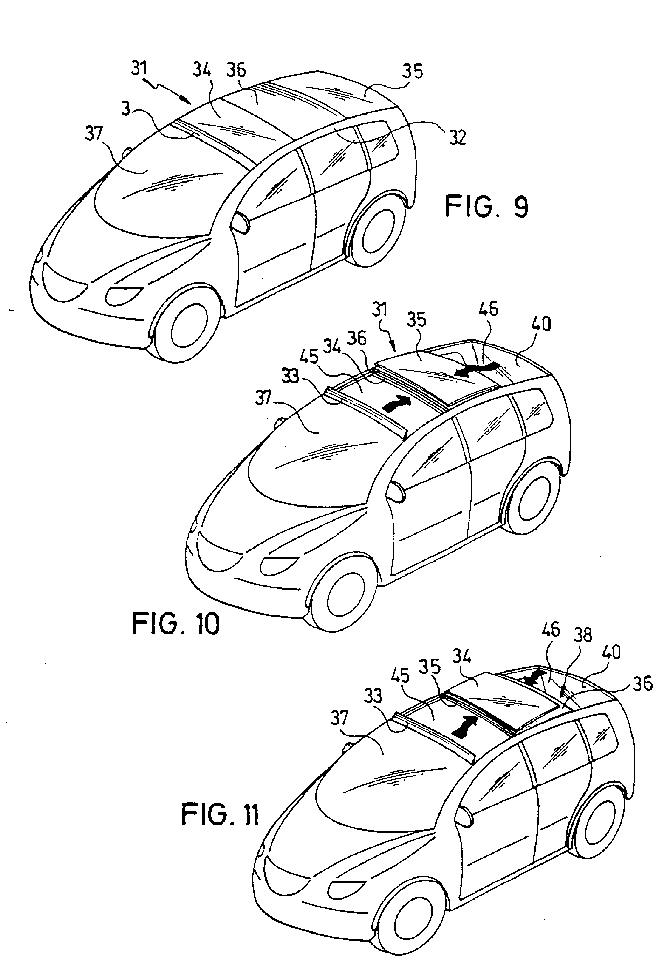

Bei dem in Fig. 9 bis 11 dargestellten Fahrzeugdach 31 schließt sich an eine Frontscheibe 37 nach hinten eine Windabweislamelle 33, ein vorderer Deckel 34 eines vorderen Dachsystems und ein hinterer Deckel 35 eines hinteren Dachsystems an. Zwischen beiden Dachsystemen ist ein Bereich 36 des festen Fahrzeugdachs 31 vorgesehen, dessen Länge in Fahrzeuglängsrichtung gesehen in etwa dem Deckel 34 bzw. dem Deckel 35 entspricht.

Die Hinterkante des hinteren Deckelteils 35 grenzt unmittelbar an die Oberkante einer Heckscheibe 40 an, die in einer Hecktür oder Heckklappe nach unten versenkbar gelagert ist.

Im Ausführungsbeispiel gemäß Fig. 10 ist der Deckel 34 des vorderen Dachsystems als Schiebe-Hebedach ausgeführt. Der Deckel 34 kann somit in an sich bekannter Weise mit seiner Hinterkante über das feste Fahrzeugdach 31 ausgestellt oder abgesenkt und nach hinten unterhalb des Niveaus des festen Fahrzeugdachs 31 verfahren werden. Der Deckel 35 des hinteren Dachsystems ist als außengeführtes Schiebedach ausgebildet, wobei das Deckelteil 35 jedoch von hinten nach vorne öffnet. Das vordere Schiebe-Hebedach mit seinem Deckel 34 und das außengeführte hintere Schiebedach mit seinem hinteren Deckelteil 35 werden seitlich von Seitenholmen 32 begrenzt.

In Fig. 10 ist das hintere Dachsystem mit dem Deckelteil 35 vollständig geöffnet, wobei der Deckel 35 von hinten nach vorne gefahren ist . Dadurch wird die hintere Dachöffnung 46 nahezu vollständig, das heißt zu etwa 90 Prozent freigelegt. Bei gleichzeitiger Absenkung der Heckscheibe 40 in die Hecktür oder Heckklappe wird eine Beladungsöffnung freigelegt, die nicht nur den hinteren Dachbereich, sondern auch den oberen Teil der hinteren Fahrzeugabdeckung (Hecktür) umfaßt. Dadurch wird ein hinterer Laderaum 38 geschaffen, die annähernd dem eines Pickup-Fahrzeugs entspricht. Hierdurch können auch sperrige Ladegüter im Laderaum 38 verladen werden. Bereits die geöffnete hintere Dachöffnung 46 ermöglicht eine großzügige Belademöglichkeit für lange Gegenstände, beispielsweise ein Surfbrett als Ladegut. Für das Abstützen langer Gegenstände kann beispielsweise am hinteren Rand der Dachöffnung 46 ein Bügel eingesetzt werden, der seitlich im Bereich der Führungsschienen befestigbar ist.

Das nach vorne geschobene Deckelteil 35 kann durch den in mehreren Zwischenstadien bis zur vollständigen Ausstellungsposition anhebbaren Deckel 34 wirksam vor dem angreifenden Fahrtwind geschützt werden. Die Position der Hinterkante des Deckels 34 liegt in vollständig ausgestellten Zustand vorzugsweise etwas höher als die ausgestellte Vorderkante des Deckels 35. Dadurch wird der Fahrtwind vollständig über den hinteren Deckel 35 hinweg geleitet. Auch die hintere Dachöffnung 46 ist dadurch wirksam vor Zugluft geschützt.

Bei dem im Fig. 10 dargestellten Öffnungszustand ist der hintere Deckel 35 weitestgehend geöffnet. Der Deckel 34 ist zur Freigabe der vorderen Dachöffnung 45 abgesenkt und nahezu vollständig unter den hinteren Deckel 35 bzw. den dazwischen liegenden Bereich 36 des festen Fahrzeugdachs 31 nach hinten verfahren. Dies ist dadurch möglich, weil die Führungsschienen für den Deckel 34 bzw. dessen Stützhebel seitlich außerhalb der Führungsschienen für den hinteren Deckel 35 angeordnet sind.

Um die vordere Dachöffnung 45 ebenfalls vor Zugluft zu schützen, ist bei geöffnetem Deckel 34 die Windabweislamelle 33 ausgestellt.

Wie in Fig. 11 dargestellt, ist der Deckel 34 des vorderen Dachsystems in dieser Variante als außengeführtes Schiebedach ausgebildet. Der Deckel 34 ist im Bereich seiner Hinterkante in ausgestellten Zustand durch einen Stützhebel auf jeder Seite abgestützt. Das untere Ende des Stützhebels ist schwenkbar an einem Gleitelement gelagert, welches längsverschiebbar in einem Führungskanal geführt ist. Der Führungskanal ist in einer Führungsschiene ausgebildet, die am Seitenholm 32 gelagert ist. Der Führungskanal ist für das Austreten des Stützhebels nach oben geöffnet und wird bei geschlossenem Deckel 34 von zwei nicht dargestellten Dichtungselementen abgedeckt, die zu beiden Seiten am oberen Rand des Führungskanals angeordnet sind.

Die Dichtungselemente sind jeweils mit einer Dichtlippe versehen, die bei geschlossenem Deckel 34 und abgesenktem Stützhebel dicht aneinander anliegen und den Führungskanal vollständig nach oben abdecken. Beim Ausstellen der Hinterkante des Deckels 34 übernimmt der Stützhebel seine Stützfunktion und tritt dabei an den Dichtlippen vorbei nach oben über das feste Fahrzeugdach 31 aus. Die Dichtlippen weichen dabei zur Seite und schmiegen sich an den Stützhebel an.

Vom Seitenholm 32 aus nach innen gesehen schließt sich an die Führungsschiene für den Stützhebel des außengeführten Schiebedachs im Bereich einer vorderen Dachöffnung 45 bzw. einer hinteren Dachöffnung 46 eine Führungsschiene an, in deren Führungskanal ein vorderes Gleitelement des vorderen Deckels 34 bzw. ein vorderes und ein hinteres Gleitelement des hinteren Deckels 35 längsverschiebbar gelagert ist. Das vordere Gleitelement dient zur Lagerung der vorderen Schwenkachse des Deckels 34. Das hintere Gleitelementen dient zur Lagerung der hinteren Schwenkachse des Deckelteils 35. Im geöffneten Zustand stützt sich der vordere Deckel 34 somit im vorderen Bereich über seine Schwenkachse an den vorderen Gleitelementen und im hinteren Bereich mittels der Stützhebel ab. Durch die stabile Abstützung im Bereich seiner Hinterkante läßt sich der vordere Deckel 34 soweit nach hinten verschieben, daß etwa 90 Prozent der vorderen Dachöffnung 45 freigelegt werden.

Das hintere Deckelteil 35 stützt sich im Bereich seiner Hinterkante über seine Schwenkachse an den Gleitelementen ab. Im Bereich der Vorderkante erfolgt die Abstützung über eine konventionelle Mechanik eines Schiebe-Hebedachs ab, die an Gleitelementen gelagert ist, welche ebenfalls beim Verschieben des hinteren Deckelteils 35 nach vorn in der Führungsschiene am Rand der hinteren Dachöffnung 46 geführt sind. Der Unterschied zu einem herkömmlichen Schiebe-Hebedach besteht in der umgekehrten Anordnung und dem Verschiebung zum Öffnen in Fahrtrichtung. Die Mechanik des vorderen Deckels 34 ist ausführlich in der DE 197 13 347 A1 beschrieben, deren Offenbarungsgehalt hiermit ausdrücklich zum Gegenstand der vorliegenden Anmeldung gemacht wird.

Durch das dargestellte Fahrzeugdach werden die Vorzüge eines bekannten außengeführten Schiebedachs mit denen eines zweiten hinteren Dachsystems für den besonderen Zweck der Freilegung eines hinteren Laderaums hervorragend kombiniert.

Anstelle eines außengeführten Schiebedaches läßt sich von für das vordere oder das hintere Dachsystem ebenso ein Spoilerdach verwenden. Anstelle eines SchiebeHebedaches läßt sich auch ein einfaches Schiebedach verwenden.

### Bezugszeichenliste

- 1: Fahrzeugdach
- 2: Seitenholm
- 3: Windabweislamelle
- 4: (vorderer) Deckel
- 4D: Hinterkante
- 5: (hinteres) Deckelteil
- 6: (mittlerer) Bereich (von 1)
- 7: Frontscheibe
- 8: Laderaum
- 9: Hecktür
- 10: Heckscheibe
- 11: Führungsschiene
- 12: Führungskanal (in 11)
- 13: (vorderes) Gleitelement (von 5)
- 14: Stützhebel (an 5)
- 15: (vordere) Dachöffnung
- 16: (hintere) Dachöffnung
- 17: Führungsschiene (in 6)
- 18: Führungskanal (für 13/21)
- 19: (hinteres) Gleitelement (an 4)
- 20: Stützhebel (an 4)
- 21: (vorderes) Gleitelement (an 4)
- 22: (hinteres) Gleitelement (an 5)
- 23: Wndabweislamelle
- 24: (vorderer) Deckel
- 25: (hinteres) Deckelteil (Hebedach)
- 26: Ladegut
- 31: Fahrzeugdach
- 32: Seitenholm
- 33: Windabweislamelle
- 34: (vorderer) Deckel
- 35: (hinterer) Deckel
- 36: (mittlerer) Bereich (von 31)
- 37: Frontscheibe
- 38: Laderaum
- 40: Heckscheibe
- 45: (vordere) Dachöffnung
- 46: (hintere) Dachöffnung

## Patentansprüche

1. Öffnungsfähiges Fahrzeugdach mit einem eine vordere Dachöffnung (15, 45) abdeckenden vorderen Dachsystem, das wenigstens einen mit seiner Hinterkante (4D) über das feste Fahrzeugdach (1, 31) ausstellbaren Deckel (4, 24, 34) umfaßt, und mit einem hinteren Dachsystem, das zumindestens ein hinteres Dachteil (5, 25, 35) aufweist, das in geschlossenem Zustand eine hintere Dachöffnung (16, 46) über einem Laderaum (8) im hinteren Bereich des Fahrzeugs abdeckt und diese in zumindest teilweise geöffnetem Zustand zumindest teilweise freigibt, **dadurch gekennzeichnet, daß** das hintere Dachteil als starrer Deckel (5, 25, 35) ausgebildet ist und mit seiner Hinterkante unmittelbar an ein öffnungsfähiges Teil (Heckscheibe 10, 40) einer Heckklappe oder Hecktür (9) des Fahrzeugs angrenzt.

2. Fahrzeugdach nach Anspruch 1, **dadurch gekennzeichnet, daß** einer der Deckel (4 oder 5 bzw. 34 oder 35) oberhalb des Niveaus des festen Fahrzeugdachs (1) und der andere Deckel (5 oder 4 bzw. 35 oder 34) unterhalb des Niveaus des festen Fahrzeugdachs (31) in Längsrichtung des Fahrzeugs verschiebbar ist.

3. Fahrzeugdach nach Anspruch 1, **dadurch gekennzeichnet, daß** der Deckel (4, 24) des vorderen Dachsystems oberhalb des Niveaus des festen Fahrzeugdachs (1) verfahrbar ist.

4. Fahrzeugdach nach einem der vorhergehenden Ansprüche, **dadurch gekennzeichnet, daß** der Deckel (4, 24, 34) des vorderen Dachsystems in vollständig ausgestelltem Zustand mit seiner Hinterkante (4D) höher liegt als die geöffneten hinteren Deckelteile (5, 25, 35) des hinteren Dachsystems.

5. Fahrzeugdach nach einem der vorhergehenden Ansprüche, **dadurch gekennzeichnet, daß** zwischen beiden Dachsystemen ein Bereich (6, 36) des festen Fahrzeugdachs (1, 31) angeordnet ist.

6. Fahrzeugdach nach einem der vorhergehenden Ansprüche, **dadurch gekennzeichnet, daß** das vordere Dachsystem ein außengeführtes Schiebedach ist, dessen Deckel (4) nahe seiner Hinterkante (4D) von Stützhebeln (20) abgestützt wird, deren untere Enden an Gleitelementen (19) gelagert sind, die an seitlich außerhalb der vorderen Dachöffnung angeordneten Führungen (17, 18) verschiebbar sind.

7. Fahrzeugdach nach einem der vorhergehenden Ansprüche, **dadurch gekennzeichnet, daß** das vordere Dachsystem einen mit seiner Hinterkante über das feste Fahrzeugdach (31) ausstellbaren oder mit seiner Hinterkante absenkbaren und unter einen Bereich (36) des festen Fahrzeugdachs (31) oder unter das hintere Dachsystem verschiebbaren Deckel (34) aufweist.

8. Fahrzeugdach nach einem der vorhergehenden Ansprüche, **dadurch gekennzeichnet, daß** die Deckel (4, 24; 5, 25; 34, 35) des vorderen und des hinteren Dachsystems über getrennte elektrische Antriebe antreibbar sind, die von einem gemeinsamen Steuergerät derart ansteuerbar sind, daß der Deckel (4, 24, 34) des vorderen Dachsystems nur ausstellbar, jedoch nicht in Längsrichtung verschiebbar ist, sobald das hintere Dachsystem (5, 25, 35) zumindestens einen bestimmten Teilöffnungsgrad erreicht hat.

9. Fahrzeugdach nach einem der vorhergehenden Ansprüche, **dadurch gekennzeichnet, daß** der Deckel (4, 24, 34) des vorderen Dachsystems zwangsweise in seine Ausstellposition verfahren wird, sobald das Steuergerät ein Signal zur Öffnung des hinteren Dachsystems (5, 25, 35) zumindestens für einen bestimmten Teilöffnungsgrad erhält.

10. Fahrzeugdach nach einem der vorhergehenden Ansprüche, **dadurch gekennzeichnet, daß** dem vorderen Dachsystem eine Windabweislamelle (3, 23, 33) vorgelagert ist, die in eine Ausstellposition verfahren wird, sobald der Deckel (4, 24, 34) des vorderen Dachsystems zumindest einen bestimmten Teilöffnungsgrad erreicht hat.

11. Fahrzeugdach nach einem der vorhergehenden Ansprüche, **dadurch gekennzeichnet, daß** das hintere Dachsystem von einem Hebedach gebildet wird, dessen Deckel (25) mit seiner Hinterkante über das feste Fahrzeugdach (1) ausstellbar und optional vollständig aus der hinteren Dachöffnung (16) entnehmbar ist.

12. Fahrzeugdach nach einem der Ansprüche 1 bis 10, **dadurch gekennzeichnet, daß** der Deckel (5, 35) des hinteren Dachsystems zumindest teilweise über oder unter den Deckel (4, 34) des vorderen Dachsystems oder einen dazwischen angeordneten mittleren Bereich (6, 36) des festen Fahrzeugdachs (1, 31) verfahrbar ist.

13. Fahrzeugdach nach Anspruch 12, **dadurch gekennzeichnet, daß** das hintere Dachsystem von einem außengeführten Schiebedach gebildet wird, dessen Deckel (5) nahe seiner Vorderkante von Stützhebeln (14) abgestützt wird, deren untere Enden an vorderen Gleitelementen (13) gelagert sind, die an seitlich außerhalb der hinteren Dachöffnung liegenden Führungen (17, 18) verschiebbar sind und deren hintere Schwenkachse an hinteren Gleitelementen (22) gelagert ist, die an seitlich im Randbereich der hinteren Dachöffnung (16) angeordneten Führungen (11, 12) verschiebbar geführt sind.

14. Fahrzeugdach nach Anspruch 13, **dadurch gekennzeichnet, daß** die Führungen (17, 18) für die vorderen Gleitelemente (13) des hinteren Dachsystems und die Führungen (17, 18) für die hinteren Gleitelemente (19) des vorderen Dachsystems in Fahrzeuglängsrichtung fluchtend angeordnet sind.

15. Fahrzeugdach nach Anspruch 14, **dadurch gekennzeichnet, daß** die Führungen (17, 18) für die vorderen Gleitelemente (13) des hinteren Dachsystems und die Führungen (17, 18) für die hinteren Gleitelemente (19) des vorderen Dachsystems durch ein durchgehendes Führungsschienen-Profil (17) gebildet werden.

## Claims

1. Openable vehicle roof having a front roof system which covers a front roof opening (15, 45) and comprises at least one panel (4, 24, 34) that can be raised with its rear edge (4D) above the fixed vehicle roof (1, 31), and having a rear roof system which has at least one rear roof part (5, 25, 35) which, in the closed state, covers a rear roof opening (16, 46) over a luggage compartment (8) in the rear region of the vehicle and at least partly opens the said roof opening in the at least partly opened state, **characterized in that** the rear roof part is constructed as a rigid panel (5, 25, 35) and, with its rear edge, immediately adjoins an openable part (rear window 10, 40) of a tailgate or rear door (9) of the vehicle.

2. Vehicle roof according to Claim 1, **characterized in that** one of the panels (4 or 5 or, respectively, 34 or 35) can be displaced in the longitudinal direction of the vehicle above the level of the fixed vehicle roof (1), and the other panel (5 or 4 or, respectively, 35 or 34) can be displaced in the longitudinal direction of the vehicle below the level of the fixed vehicle roof (31).

3. Vehicle roof according to Claim 1, **characterized in that** the panel (4, 24) of the front roof system can be moved above the level of the fixed vehicle roof (1).

4. Vehicle roof according to one of the preceding claims, **characterized in that**, in the completely raised state, the panel (4, 24, 34) of the front roof system is located with its rear edge (4D) higher than the opened rear panel parts (5, 25, 35) of the rear roof system.

5. Vehicle roof according to one of the preceding claims, **characterized in that** a region (6, 36) of the fixed vehicle roof (1, 31) is arranged between the two roof systems.

6. Vehicle roof according to one of the preceding claims, **characterized in that** the front roof system is an externally guided sliding roof, whose panel (4) is supported close to its rear edge (4D) by supporting levers (20), whose lower ends are mounted on sliding elements (19) which can be displaced on guides (17, 18) arranged laterally outside the front roof opening.

7. Vehicle roof according to one of the preceding claims, **characterized in that** the front roof system has a panel (34) which can be raised with its rear edge above the fixed vehicle roof (31) or can be lowered with its rear edge and displaced under a region (36) of the fixed vehicle roof (31) or under the rear roof system.

8. Vehicle roof according to one of the preceding claims, **characterized in that** the panels (4, 24; 5, 25; 34, 35) of the front and of the rear roof system can be driven by separate electric drives, which can be activated by a common control device in such a way that the panel (4, 24, 34) of the front roof system can only be raised but not displaced in the longitudinal direction as soon as the rear roof system (5, 25, 35) has reached at least a specific partial opening level.

9. Vehicle roof according to one of the preceding claims, **characterized in that** the panel (4, 24, 34) of the front roof system is moved positively into its raised position as soon as the control device receives a signal to open the rear roof system (5, 25, 35), at least for a specific partial opening level.

10. Vehicle roof according to one of the preceding claims, **characterized in that** a wind deflector louvre (3, 23, 33) is placed in front of the front roof system and can be moved into a raised position as soon as the panel (4, 24, 34) of the front roof system has reached at least a specific partial opening level.

11. Vehicle roof according to one of the preceding claims, **characterized in that** the rear roof system is formed by a lifting roof, whose panel (25) can be raised with its rear edge above the fixed vehicle roof (1) and can optionally be removed completely from the rear roof opening (16).

12. Vehicle roof according to one of Claims 1 to 10, **characterized in that** the panel (5, 35) of the rear roof system can be moved at least partly over or under the panel (4, 34) of the front roof system or a central region (6, 36) of the fixed vehicle roof (1, 31) arranged between them.

13. Vehicle roof according to Claim 12, **characterized in that** the rear roof system is formed by an externally guided sliding roof, whose panel (5) is supported close to its front edge by supporting levers (14), whose lower ends are mounted on front sliding elements (13), which can be displaced on guides (17, 18) located laterally outside the rear roof opening and whose rear pivot axis is mounted on rear sliding elements (22) which are guided such that they can be displaced on guides (11, 12) arranged laterally in the edge region of the rear roof opening (16).

14. Vehicle roof according to Claim 13, **characterized in that** the guides (17, 18) for the front sliding elements (13) of the rear roof system and the guides (17, 18) for the rear sliding elements (19) of the front roof system are arranged in alignment in the vehicle longitudinal direction.

15. Vehicle roof according to Claim 14, **characterized in that** the guides (17, 18) for the front sliding elements (13) of the rear roof system and the guides (17, 18) for the rear sliding elements (19) of the front roof system are formed by a continuous guide rail profile (17).

## Revendications

1. Toit ouvrant pour véhicule avec un système de toit avant qui recouvre une ouverture de toit avant (15, 45) et qui comprend au moins un couvercle (4, 24, 34) pouvant être projeté avec son bord arrière (4D) par-dessus le toit fixe (1, 31) du véhicule et avec un système de toit arrière qui comprend au moins une partie de toit arrière (5, 25, 35) qui, lorsqu'elle est fermée, recouvre une ouverture de toit arrière (16, 46) se trouvant au-dessus d'un compartiment de chargement (8) situé dans la zone arrière du véhicule et libère au moins partiellement celle-ci dans la position au moins partiellement ouverte, **caractérisé en ce que** la partie de toit arrière est configurée comme couvercle rigide (5, 25, 35) et est directement contigue avec son bord arrière avec une partie pouvant être ouverte (vitre arrière 10, 40) d'une trappe arrière ou d'une porte arrière (9) du véhicule.

2. Toit ouvrant pour véhicule selon la revendication 1, **caractérisé en ce qu'**un des couvercles (respectivement 4 ou 5 et 34 ou 35) est déplaçable au-dessus du niveau du toit fixe (1) du véhicule et que l'autre couvercle (respectivement 5 ou 4 et 35 ou 34) est déplaçable au-dessous du niveau du toit fixe (1) du véhicule, dans le sens longitudinal du véhicule.

3. Toit ouvrant pour véhicule selon la revendication 1, **caractérisé en ce que** le couvercle (4, 24) du système de toit avant est déplaçable au-dessus du niveau du toit fixe (1) du véhicule.

4. Toit ouvrant pour véhicule selon l'une quelconque des revendications précédentes, **caractérisé en ce que**, dans l'état de projection complète, le bord arrière (4D) du couvercle (4, 24, 34) du système de toit avant est situé plus haut que les parties de couvercle arrière ouvertes (5, 25, 35) du système de toit arrière.

5. Toit ouvrant pour véhicule selon l'une quelconque des revendications précédentes, **caractérisé en ce qu'**entre les deux systèmes de toit se trouve une zone (6, 36) du toit fixe (1,31) du véhicule.

6. Toit ouvrant pour véhicule selon l'une quelconque des revendications précédentes, **caractérisé en ce que** le système de toit avant est un toit coulissant guidé à l'extérieur dont le couvercle (4) est étayé près de son bord arrière (4D) par des leviers de soutien (20) dont les extrémités inférieures sont logées sur des éléments de coulissement (19) qui sont déplaçables sur des guides (17, 18) placés latéralement en dehors de l'ouverture de toit avant.

7. Toit ouvrant pour véhicule selon l'une quelconque des revendications précédentes, **caractérisé en ce que** le système de toit avant comprend un couvercle (34) qui peut être projeté avec son bord arrière par-dessus le toit fixe (31) du véhicule ou qui peut être abaissé avec son bord arrière et être déplacé sous une zone (36) du toit fixe (31) du véhicule ou sous le système de toit arrière.

8. Toit ouvrant pour véhicule selon l'une quelconque des revendications précédentes, **caractérisé en ce que** les couvercles (4, 24 ; 5, 25 ; 34, 35) du système de toit avant et du système de toit arrière peuvent être entraînés par des entraînements électriques séparés, lesquels peuvent être activés de telle façon par une unité de commande commune que le couvercle (4, 24, 34) du système de toit avant peut être seulement projeté mais pas déplacé dans le sens longitudinal dès que le système de toit arrière (5, 25, 35) a au moins atteint un degré d'ouverture partiel déterminé.

9. Toit ouvrant pour véhicule selon l'une quelconque des revendications précédentes, **caractérisé en ce que** le couvercle (4, 24, 34) du système de toit avant est obligatoirement déplacé dans sa position de projection dès que l'unité de commande reçoit un signal pour effectuer une ouverture du système de toit arrière (5, 25, 35), et ceci au moins pour un degré d'ouverture partielle déterminé.

10. Toit ouvrant pour véhicule selon l'une quelconque des revendications précédentes, **caractérisé en ce que** le système de toit avant est précédé d'un déflecteur d'air (3, 23, 33) qui est déplacé dans une position de projection dès que le couvercle (4, 24, 34) du système de toit avant a atteint au moins un degré partiel d'ouverture déterminé.

11. Toit ouvrant pour véhicule selon l'une quelconque des revendications précédentes, **caractérisé en ce que** le système de toit arrière est constitué d'un toit relevable dont le couvercle (25) peut être projeté avec son bord arrière au-dessus du toit fixe (1) du véhicule et qui peut en option être retiré entièrement hors de l'ouverture arrière (16) du toit.

12. Toit ouvrant pour véhicule selon l'une quelconque des revendications 1 à 10, **caractérisé en ce que** le couvercle (5, 35) du système de toit arrière peut être déplacé au moins partiellement au-dessus ou au-dessous du couvercle (4, 34) du système de toit avant ou d'une zone médiane (6, 36) du toit fixe (1, 31) du véhicule qui est située entre les deux.

13. Toit ouvrant pour véhicule selon la revendication 12, **caractérisé en ce que** le système de toit arrière est formé par un toit coulissant guidé à l'extérieur dont le couvercle (5) est étayé près de son bord avant par des leviers de soutien (14) dont les extrémités inférieures sont logées sur des éléments de coulissement avant (13) qui sont déplaçables sur des guides (17, 18) placés latéralement en dehors de l'ouverture de toit arrière et dont l'axe de pivotement arrière est logé dans des éléments de coulissement arrière (22) qui sont guidés de manière coulissante dans des guides (11, 12) disposés latéralement dans la zone marginale de l'ouverture de toit arrière (16).

14. Toit ouvrant pour véhicule selon la revendication 13, **caractérisé en ce que** les guides (17, 18) pour les éléments de coulissement avant (13) du système de toit arrière et les guides (17, 18) pour les éléments de coulissement arrière (19) du système de toit avant sont disposés en alignement dans la direction longitudinale du véhicule.

15. Toit ouvrant pour véhicule selon la revendication 14, **caractérisé en ce que** les guides (17, 18) pour les éléments de coulissement avant (13) du système de toit arrière et les guides (17, 18) pour les éléments de coulissement arrière (19) du système de toit avant sont formés par un profilé de rail de guidage continu (17).
